# EUROPÄISCHE PATENTSCHRIFT

(11) **EP 3 615 929 B1**
(45) Veröffentlichungstag und Bekanntmachung des Hinweises auf die Patenterteilung: **25.01.2023**
(21) Anmeldenummer: 18726906.3
(22) Anmeldetag: 20.03.2018
(51) Int. Cl.: G01N 31/12

(54) **VERFAHREN ZUM BESTIMMEN EINES STICKSTOFFGEHALTES IN FESTEN ODER FLÜSSIGEN PROBEN**
METHOD FOR DETERMINING THE NITROGEN CONTENT IN SOLID OR LIQUID SAMPLES
PROCÉDÉ DE DÉTERMINATION DE LA TENEUR EN AZOTE DANS DES ÉCHANTILLONS SOLIDES OU LIQUIDES

(30) Priorität: 20.03.2017 DE 102017002627
(43) Veröffentlichungstag der Anmeldung: 04.03.2020
(73) Patentinhaber: Taunus Instruments GmbH, 61267 Neu Anspach (DE)
(72) Erfinder: DUNSBACH, Ralf, 61267 Neu-Anspach (DE)
(74) Vertreter: Körner, Volkmar Horst
(86) Internationale Anmeldenummer: PCT/DE2018/100241
(87) Internationale Veröffentlichungsnummer: WO 2018/171836

(56) Entgegenhaltungen:
- EP-A1- 2 919 005
- DE-A1- 3 538 778
- DE-A1- 19 741 810
- DE-A1-102010 028 211
- DE-A1-102014 012 914

## Beschreibung

Die Erfindung betrifft ein Verfahren zum Bestimmen eines Stickstoffgehaltes in festen oder flüssigen Proben, wobei durch Oxidation der Probe ein Messgas erzeugt wird, dem Messgas ein Trägergas hinzugefügt wird und die Sauerstoff- und Stickoxidbestandteile im Messgas zu Wasser und Stickstoff umgewandelt werden, wobei in dem verbleibenden Stickstoff Trägergas Gemisch der Anteil des Stickstoffs detektiert wird.

Der Proteingehalt in Nahrungsmitteln wie Weizen, Milch oder dergleichen wird im Regelfall über den Stickstoffgehalt einer Probe bestimmt. Der Stickstoffgehalt wird dann mittels eines geeigneten Faktors auf den Proteingehalt umgerechnet. Auch in Substraten wie beispielsweise Ackerböden ist der Stickstoffgehalt von Interesse, um auf diese Weise die Nährstoffeigenschaften des Substrates anhand einer Probe bestimmen zu können.

Die DE 35 38 778 A1 offenbart ein Verfahren und eine Vorrichtung zum Bestimmen des Gehalts an Stickstoff in einer Probe. Hierbei wird die Probe in einem mit Sauerstoff angereicherten, stickstofffreien, inerten Trägergas verbrannt. Als Trägergas wird CD2 verwendet.

Ein Verfahren zur Bestimmung von Kohlenstoff-, Wasserund Stickstoffgehalten in einem organischen Material ist beispielsweise aus der US 4,525,328 C bekannt. Bei diesem Verfahren wird das organische Material verbrannt und ein Trägergas zugesetzt. Als Trägergas wird sehr kostenintensives Helium verwendet.

Dieses Verfahren wird auch als Dumas- Verfahren bezeichnet. Dabei wird eine Probe in einem sauerstoffhaltigen Trägergasstrom verbrannt, störende Verbrennungsprodukte adsorptiv entfernt und die unterschiedlichen Oxidationsprodukte des Stickstoffs durch chemische Reduktion beispielsweise an Kupfer oder Wolfram zu elementaren Stickstoff reduziert. Das Kupfer oder Wolfram muss auf etwa 600-700°C erwärmt werden. Bei der Reduktion der Sauerstoff- und Stickoxidbestandteile entsteht Kupferoxid oder Wolframoxid. Dieses Verfahren hat den wesentlichen Nachteil, dass sich das Reduktionsmittel durch Oxidation sehr schnell verbraucht und unter einer Unterbrechung des Analyseablaufs ersetzt werden muss. Dies führt zu einem großen Wartungsaufwand und zu hohen Kosten des Verfahrens.

Der Erfindung liegt das Problem zugrunde, eine kontinuierliche Umsetzung von Stickstoffoxiden zu Stickstoff und Sauerstoffverbindungen zu ermöglichen.

Dieses Problem wird erfindungsgemäß dadurch gelöst, dass zur Reduktion der Sauerstoff- und Stickoxidbestandteile dem Messgas Wasserstoff hinzugefügt wird und dass die Reduktion des Messgases an einem Katalysator erfolgt, wobei die Parameter Temperatur, Verweildauer, Art des Katalysators so gewählt werden, dass Stickstoff entsteht und eine weitergehende Reduktion zu Ammoniak vermieden wird.

Das erfindungsgemäße Verfahren ist in Anspruch 1 definiert.

Durch diese Gestaltung ermöglicht die Reduktion der Sauerstoff- und Stickoxidbestandteile im Messgas mittels Wasserstoff einen kontinuierlichen Verfahrensablauf. Dies führt zu einer wesentlichen Vereinfachung des Verfahrens, da kein manueller Eingriff in den Analyseablauf erforderlich ist. Der Sauerstoff im Messgas wird von dem zugesetzten Wasserstoff zu Wasser und Stickoxide zu Stickstoff und Wasser reduziert. Damit lassen sich die Stickstoffverbindungen zu Stickstoff und weiteren Verbrennungsprodukten umwandeln. Das erfindungsgemäße Verfahren gestaltet sich hierdurch besonders kostengünstig. Die Reduktion des Messgases lässt sich zuverlässig steuern, weil die Reduktion des Messgases an einem Katalysator erfolgt. Über Parameter, wie die Temperatur, die Verweildauer und die Art des Katalysators lassen sich die Produkte steuern. Im Falle der Reduktion des Messgases werden die Parameter derart gewählt, dass möglichst ausschließlich Stickstoff erzeugt wird, eine Weitergehende Reduktion zu Ammoniak ist zu vermeiden. Vorzugsweise werden Platin oder Platinmetalle, auch als Legierung, als Katalysator eingesetzt.

Der Einsatz von Helium als Trägergas lässt sich gemäß einer anderen vorteilhaften Weiterbildung der Erfindung einfach vermeiden, wenn das Trägergas Wasserstoff ist, so dass dem Messgas mehr Wasserstoff zugeführt wird als für die Reduktion der Sauerstoff- und Stickoxidbestandteile notwendig ist. Durch diese Gestaltung werden auch die Sauerstoff- und Stickoxidbestandteile in dem Messgas bei Wasserstoffüberschuss umgesetzt, was einen zu einem besonders reproduzierbaren Verfahrensablauf führt.

Eine Störung der Bestimmung durch verschiedene Gasbestandteile lassen sich gemäß einer anderen vorteilhaften Weiterbildung der Erfindung einfach vermeiden, wenn vor der Zuführung von Wasserstoff nichtstickstoffhaltige Gasbestandteile abgetrennt werden. Eine solche Abtrennung kann beispielsweise absorptiv oder chromatografisch erfolgen.

Eine zuverlässige Oxidation der Probe lässt sich gemäß einer anderen vorteilhaften Weiterbildung der Erfindung einfach sicherstellen, wenn Oxidation der Probe in einem sauerstoffhaltigem Gas an einem Katalysator erfolgt.

Der genaue Stickstoffgehalt in dem Stickstoff Trägergas Gemisch lässt sich gemäß einer anderen vorteilhaften Weiterbildung der Erfindung besonders einfach ermitteln, wenn die Detektion des Stickstoffs in dem Stickstoff Wasserstoff Gemisch durch die Ermittelung der Wärmeleitfähigkeit erfolgt.

Die Konzentration der Elemente Kohlenstoff, Wasserstoff und Schwefel in der Ausgangsprobe lässt sich gemäß einer anderen vorteilhaften Weiterbildung der Erfindung einfach ermitteln, wenn nach der Oxidation der Probe und vor der Zugabe von Wasserstoff der Gehalt der Oxidationsprodukte Kohlendioxid, Schwefeldioxid und Wasser detektiert wird. Eine solche Detektion lässt sich mittels Wärmeleitfähigkeitsdetektion oder Infrarotdetektion einfach durchführen.

Das Verfahren gestaltet sich gemäß einer anderen vorteilhaften Weiterbildung der Erfindung besonders kostengünstig, wenn nach der Oxidation ein Gassplit durchgeführt wird und der Wasserstoff ausschließlich einem vorgesehenen Bruchteil des Messgases zugeführt wird. Durch diese Gestaltung können übliche Probengrößen untersucht werden, ohne das gesamte entstehende Messgas zu untersuchen. Anstelle des gesamten Messgases werden beispielsweise nur 10% des Messgases untersucht und das Ergebnis auf die gesamte Probe umgerechnet.

Bei der Reduktion der Stickstoffbestandteile entstehendes Wasser lässt sich gemäß einer anderen vorteilhaften Weiterbildung der Erfindung besonders kostengünstig abführen, wenn die Abtrennung von Wasser vor dem Detektieren des Stickstoffanteils im Stickstoff Trägergas Gemisch durch Kühlung erfolgt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: ein Flussdiagramm mit einzelnen Schritten eines Verfahrens zum Bestimmen eines Stickstoffgehaltes,
- Fig.2: schematisch einen Teilbereich einer Vorrichtung zur Durchführung des Verfahrens aus Figur 1.

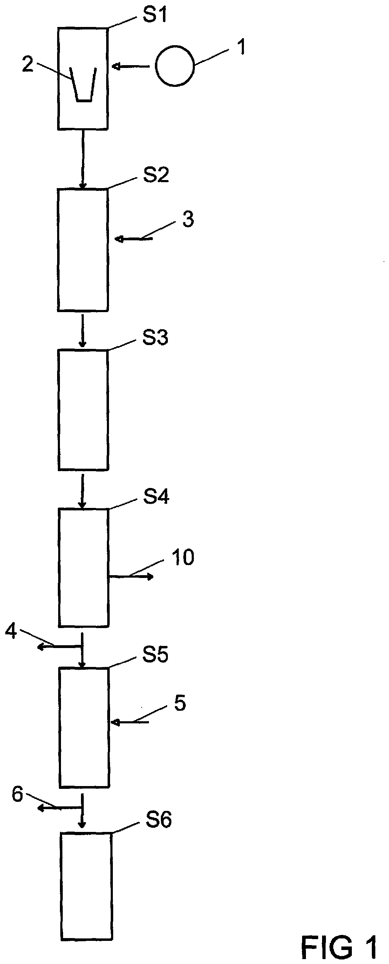

Figur 1 zeigt ein Verfahren zum Bestimmen eines Stickstoffgehaltes in einer festen oder flüssigen Probe 1. Die Probe wird in einem ersten Schritt S1 in eine geeignete Verpackung, im vorliegenden Fall einen Tiegel 2 gegeben und einem Verbrennungsofen zugeführt. In einem Schritt S2 erfolgt die Verbrennung der Probe bei Zuführung eines sauerstoffhaltigem Gasstroms 3 an einem nicht näher dargestellten Katalysator. In einem Schritt S3 erfolgt die Bestimmung von Kohlendioxid, Schwefeldioxid oder Wasser in einem geeigneten Detektor, beispielsweise einem Infrarotdetektor. Nach einer Abtrennung von nicht stickstoffhaltigen Gasbestandteilen 10 wie Kohlendioxid, Schwefeldioxid und Wasser in einem Schritt S4 erfolgt ein Split des Messgases. Ein Teilstrom 4 des Messgases wird abgeführt und ein kleinerer Teil einer Reduktion in einem Schritt S5 hinzugefügt. Die Reduktion des Messgases erfolgt an einem nicht näher dargestellten Katalysator unter Hinzugabe von Wasserstoff 5. Nach dem Schritt S5 wird noch vorhandenes Wasser 6 aus dem Messgas abgeführt. Es verbleibt eine Trägergas/ Stickstoffmischung, die in einem Schritt S6 analysiert wird. Da als Trägergas Wasserstoff eingesetzt wurde handelt es sich um eine Wasserstoff/Stickstoffmischung. Bei dieser Analyse wird der Gehalt von Stickstoff in der Mischung erfasst. Dieser Gehalt von Stickstoff ist bei Kenntnis der Abgeführten und zugeführten Masseanteilen ein Maß für den Stickstoffanteil in der Probe.

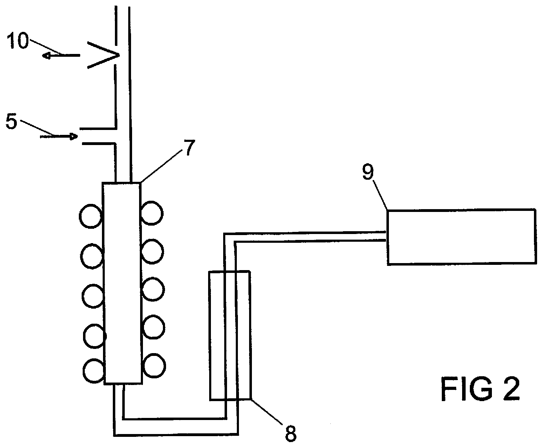

Figur 2 zeigt einen Teilbereich einer Vorrichtung zur Durchführung des Verfahrens nach Figur 1 nach dem Split und der Hinzuführung von Wasserstoff 5 für den Schritt S5. Der Schritt S5 findet in einem auf etwa 200°C beheizten Reduktionsrohr 7 mit einem nicht näher dargestellten Katalysator statt. Das Messgas fließt aus dem Reduktionsrohr 7 durch einen Kühler 8, in dem das Wasser 6 gemäß Figur 1 abgeführt wird, und gelangt anschließend in einen Detektor 9, in dem der Schritt S6 der Ermittlung des Stickstoffanteils in dem Gasgemisch erfolgt. Bei dem Detektor 9 handelt es sich um einen Wärmeleitfähigkeitsdetektor.

## Patentansprüche

1. Verfahren zum Bestimmen eines Stickstoffgehaltes in festen oder flüssigen Proben (1), wobei durch Oxidation der Probe (1) im Sauerstoffstrom ein Messgas erzeugt wird, dem Messgas ein Trägergas hinzugefügt wird und die Sauerstoff- und Stickoxidbestandteile im Messgas zu Wasser (6) und Stickstoff umgewandelt werden, wobei in dem verbleibenden Stickstoff Trägergas Gemisch der Anteil des Stickstoffs detektiert wird, **dadurch gekennzeichnet,**
**dass** zur Reduktion der Sauerstoff- und Stickoxidbestandteile dem Messgas Wasserstoff (5) als Trägergas hinzugefügt wird und dass die Reduktion des Messgases an einem Katalysator erfolgt, wobei die Parameter Temperatur, Verweildauer, Art des Katalysators so gewählt werden, dass Stickstoff entsteht und eine weitere Reduktion zu Ammoniak vermieden wird.

2. Verfahren nach Anspruch 1, **dadurch gekennzeichnet, dass** das Trägergas Wasserstoff (5) ist, so dass dem Messgas mehr Wasserstoff (5) zugeführt wird als für die Reduktion der Sauerstoff- und Stickoxidbestandteile notwendig ist.

3. Verfahren nach Anspruch l oder 2, **dadurch gekennzeichnet, dass** vor der Zuführung von Wasserstoff (5) nichtstickstoffhaltige Gasbestandteile (10) abgetrennt werden.

4. Verfahren nach einem der Ansprüche 1 bis 3, **dadurch gekennzeichnet, dass** Oxidation der Probe (1) in einem sauerstoffhaltigem Gas (3) an einem Katalysator erfolgt.

5. Verfahren nach einem der Ansprüche 1 bis 4, **dadurch gekennzeichnet, dass** die Detektion des Stickstoffs in dem Stickstoff Wasserstoff Gemisch durch die Ermittelung der Wärmeleitfähigkeit erfolgt.

6. Verfahren nach einem der Ansprüche 1 bis 5, **dadurch gekennzeichnet, dass** nach der Oxidation der Probe und vor der Zugabe von Wasserstoff (5) der Gehalt der Oxidationsprodukte Kohlendioxid, Schwefeldioxid und Wasser detektiert wird.

7. Verfahren nach einem der Ansprüche 1 bis 6, **dadurch gekennzeichnet, dass** nach der Oxidation ein Gassplit durchgeführt wird und der Wasserstoff (5) ausschließlich einem vorgesehenen Bruchteil des Messgases zugeführt wird.

8. Verfahren nach einem der Ansprüche 1 bis 7, **dadurch gekennzeichnet, dass** die Abtrennung von Wasser (6) vor dem Detektieren des Stickstoffanteils im Stickstoff Trägergas Gemisch durch Kühlung erfolgt.

## Claims

1. A method for determining a nitrogen content in solid or liquid samples (1), wherein a measuring gas is generated by oxidation of the sample (1) in the oxygen stream, a carrier gas is added to the measuring gas and the oxygen and nitrogen oxide components in the measuring gas are converted into water (6) and nitrogen, wherein the share of the nitrogen is detected in the remaining nitrogen carrier gas mixture, **characterized in that** hydrogen (5) is added as carrier gas to the measuring gas for reducing the oxygen and nitrogen oxide components and that the reduction of the measuring gas takes place on a catalyst, wherein the parameters of temperature, dwell time, type of catalyst are selected so that nitrogen is created and a further reduction to ammonia is avoided.

2. The method according to claim 1, **characterized in that** the carrier gas is hydrogen (5), so that more hydrogen (5) is fed to the measuring gas than is necessary for the reduction of the oxygen and nitrogen oxide components.

3. The method according to claim 1 or 2, **characterized in that** before the feeding of hydrogen (5) non-nitrogen-containing gas components (10) are separated.

4. The method according to any one of claims 1 to 3, **characterized in that** oxidation of the sample (1) takes place in an oxygen-containing gas (3) on a catalyst.

5. The method according to any one of claims 1 to 4, **characterized in that** the detection of the nitrogen in the nitrogen hydrogen mixture takes place by determining the thermal conductivity.

6. The method according to any one of claims 1 to 5, **characterized in that** after the oxidation of the sample and before the addition of hydrogen (5), the content of the oxidation products carbon dioxide, sulfur dioxide and water is detected.

7. The method according to any one of claims 1 to 6, **characterized in that** a gas split is darried out after the oxidation and the hydrogen (5) is fed exclusively to a designated fraction of the measuring gas.

8. The method according to any one of claims 1 to 7, **characterized in that** the separation of water (6) takes place by cooling prior to the detecion of the nitrogen component in the nitogen carier gas.

## Revendications

1. Procédé de détermination d'une teneur en azote dans des échantillons solides ou liquides (1), dans lequel, par oxydation de l'échantillon (1) dans un flux d'oxygène, un gaz de mesure est produit, un gaz porteur est ajouté au gaz de mesure et les composantes d'oxygène et d'oxyde d'azote dans le gaz de mesure sont transformées en eau (6) et en azote, dans lequel, dans le mélange azote-gaz porteur restant, la part d'azote est détectée, **caractérisé en ce que**
pour la réduction des composantes d'oxygène et d'oxyde d'azote, de l'hydrogène (5) est ajouté au gaz de mesure en tant que gaz porteur et la réduction du gaz de mesure a lieu au niveau d'un catalyseur, dans lequel les paramètres température, durée de séjour, type de catalyseur sont choisis de façon à ce que de l'azote soit produit et à ce qu'une réduction supplémentaire en ammoniac soit évitée.

2. Procédé selon la revendication 1, **caractérisé en ce que** le gaz porteur est de l'hydrogène (5), de façon à ce que plus d'hydrogène (5) soit ajouté au gaz de mesure que cela est nécessaire pour la réduction des composantes d'oxygène et d'oxyde d'azote.

3. Procédé selon la revendication 1 ou 2, **caractérisé en ce que**, avant l'introduction de l'hydrogène (5), les composants du gaz (10) ne contenant pas d'azote sont séparés.

4. Procédé selon l'une des revendications 1 à 3, **caractérisé en ce que** l'oxydation de l'échantillon (1) a lieu dans un gaz contenant de l'oxygène (3) au niveau d'un catalyseur.

5. Procédé selon l'une des revendications 1 à 4, **caractérisé en ce que** la détection de l'azote a lieu dans le mélange azote-hydrogène grâce à la détermination de la conductivité thermique.

6. Procédé selon l'une des revendications 1 à 5, **caractérisé en ce que**, après l'oxydation de l'échantillon et avant l'ajout d'hydrogène (5), la teneur des produits d'oxydation dioxyde de carbone, dioxyde de soufre et eau est détectée.

7. Procédé selon l'une des revendications 1 à 6, **caractérisé en ce que**, après l'oxydation, une répartition du gaz est effectuée et l'hydrogène (5) est exclusivement ajouté à une fraction prévue du gaz de mesure.

8. Procédé selon l'une des revendications 1 à 7, **caractérisé en ce que** la séparation de l'eau (6) avant la détection de la part d'azote dans le mélange azote-gaz porteur a lieu par refroidissement.
